# EUROPEAN PATENT SPECIFICATION

(11) **EP 0 471 402 B1**
(45) Date of publication and mention of the grant of the patent: **02.11.1995**
(21) Application number: 91201981.7
(22) Date of filing: 30.07.1991
(51) Int. Cl.: C08L 23/08, C08L 3/08, C08K 5/05

(54) **Composition comprising a polymer consisting of units derived from an unsaturated hydrocarbon monomer, a starchy material and a compatibilizing agent**
Zusammensetzung enthaltend ein Polymer bestehend aus Einheiten abgeleitet von einem ungesättigten Kohlenwasserstoffmonomer, ein stärkehaltiges Material und ein verträglichmachendes Mittel
Composition comprenant un polymère composé d'unités dérivés à partir d'un monomère insaturé d'hydrocarbones, un produit amylacé et un agent de compatibilisation

(30) Priority: 15.08.1990 NL 9001826
(43) Date of publication of application: 19.02.1992
(73) Proprietor: CARGILL B.V., NL-4612 PS Bergen op Zoom (NL)
(72) Inventor: Bussink, Jan, Prof. Drs., NL-4625 CT Bergen op Zoom (NL); German, Anton Leendert, Prof. Dr. Ir., NL-5655 JD Eindhoven (NL); Meijer, Henricus Eduard Hubertus, Prof. Dr. Ir., NL-5502 JA Veldhoven (NL); Delrue, Rita Maria, Ing., NL-4621 HR Bergen op Zoom (NL); Zijderveld, Antonius Hendrik, Drs., NL-8171 XT Vaassen (NL)
(74) Representative: Ellowicz, Leo, Drs.

(56) References cited:
- EP-A- 0 032 802
- WO-A-91/03940
- DE-A- 1 470 846
- GB-A- 1 044 028
- US-A- 4 133 784
- US-A- 4 863 655

## Description

This invention relates to a composition containing a polymer, consisting of units derived from an unsaturated hydrocarbon monomer, a starch based material and a compatibilizing agent.

Such a composition, comprising a starch based material, a copolymer of ethylene and acrylic acid (EAA) as the compatibilizing agent and polyethylene, is described in EP-A-0 032 802 and is used for the production of a flexible, self-supporting and biodegradable film. The use of a starch based material in plastic (film) production is very advantageous as starch is widely available at low cost and is biodegradable. In order to produce a film according to EP-A-0 032 802 a sufficient amount of aqueous ammonia or anhydrous ammonia has to be incorporated as a neutralizing agent to neutralize at least half of the acidic portion of the EAA. Furthermore the moisture content of the composition has to be in the range of about 2-10%.

The purpose of the present invention is to provide a composition according to the preamble of claim 1 in which a large amount of starch based material can be incorporated and of which the properties in terms of strength, elasticity and film forming are improved.

The present invention provides a composition according to the preamble of claim 1 which is formulated as indicated in the characterizing part of claim 1.

The polyhydric aliphatic alcohol shows a very good dispersing action and provides excellent properties in terms of strength, elasticity and film forming. The copolymers of ethylene and vinyl acetate (EVA) and of ethylene and acrylic acid (EAA) and the terpolymer of ethylene, vinylacetate and (meth)acrylic acid act as compatibilizing agents. Furthermore, the addition of a neutralizing agent or the presence of aspecific moisture content is not necessary for the present purposes.

WO-A-91/03940, which has an older priority than the present application but which is not a prior publication, relates to a biodegradable composition of a starch derivative, e.g. a hydroxyalkyl derivative of starch, and a synthetic polymer such as polyethylene or ethylene vinyl acetate copolymer to increase the flexibility, as well as a plasticizer such as glycerol. However, this reference does not disclose explicitly the combination of a hydrocarbon polymer and a vinyl acetate or acrylic polymer as in the present invention. The composition according to WO 91/03940 contains an active agent to be released at a predetermined rate, such as an insecticide, herbicide, fungicide, fertilizer, etc.

DE-A-1,470,846 discloses a combination of an alkyl or hydroxyalkyl starch ether, specifically a hydroxyethyl starch ether or a hydroxypropyl starch ether, having the abovementioned degree of substitution, an alcohol such as propylene glycol, diethylene glycol or glycerine as a plasticizer therefore, a well as water in an amount of 1-20 % by weight. However, this reference does not mention a hydrocarbon polymer or any other polymer to be used in combination with the starch derivative and also a compatibilizing agent is not disclosed. Furthermore, in contrast to the present application, water has to be present according to this reference.

The present invention also relates to a process for preparing the above-mentioned composition, as well as to products which have been made by means of this composition or with the use of said process.

The polymer consisting of units derived from an unsaturated hydrocarbon monomer preferably comprises polyethylene. Also other polyolefines, such as polypropylene, can be used and furthermore polystyrene, as well as copolymers of these unsaturated hydrocarbons.

The degree of substitution of the etherified starch should be at least 0,25 and preferably 0,4-1,0, while the preferred starch ethers are hydroxypropyl ethers, obtained by condensation of starch with propylene oxide. Said condensation should preferably be carried out using alkaline catalysis, in particular with NaOH, whereby a statistic distribution of the products occurs.

Examples of the polyhydric alcohol used in this invention as dispersant/plasticizer/lubricant are ethylene glycol, propylene glycol, glycerine, butylene glycol, diethylene glycol, pentaerythritol and dipentaerythritol can be mentioned as such alcohols. Ethylene glycol, propylene glycol and pentaerythritol are preferred and of these compounds ethylene glycol is most preferred.

The present polyhydric alcohols are used in amounts which cause to swell or partially dissolve the starch ether and they should not be used in such a large amount that a complete dissolution is achieved. For example the preferred hydroxypropyl starch dissolves in ethylene glycol in an amount of 30 % at 75°C and in propylene glycol in an amount of 40 %, while this compound dissolves in glycerol in an amount of 10 % at 100°C.

Preferably 20-80 % by weight of starch ether, 11-19 % by weight of compatibilizing copolymer and 2-8 % by weight of polyhydric alcohol is used in the composition of this invention.

Because processing the mixture always involves a heating step, the polyhydric alcohol can completely develop its swelling or partially dissolving action.

A preferred process for preparing the present composition comprises extruding together the starch ether and the polyhydric alcohol and thereafter mixing the thus obtained homogeneous mixture with the other components and extruding said mixture.

Although the invention is not dependant on or restricted by theoretical considerations, it is believed that the hydrogen bondings of the starch are disrupted by the etherification, whereafter the polyhydric alcohol causes a further disentanglement of the starch molecules, so that the starch particles are present independently of each other and can be substantially completely molecularly dispersed. Sometimes this leads to clear beads when the starch ether and the polyhydric alcohol are extruded together.

The composition of this invention is excellently suitable for the manufacture of films, but also of three-dimensional objects. Furthermore, starch ethers and the polyhydric alcohol used are cheap materials, cheaper than the hydrocarbon polymer. A perfect composition containing 50 % of starch ether can be obtained easily and also higher percentages of starch ether are suitable. Of course the optimal percentage of starch ether will also depend on the use of the composition.

The following non-limiting examples illustrate this invention.

### Example I

A mixture of hydroxypropyl starch having a degree of substitution of 0.5 and 10 % by weight of ethylene glycol, based on the starch, was extruded at 75°C and clear beads were thus obtained. 55 parts by weight of the beads were admixed with 15 parts by weight of EAA and 30 parts by weight of low density polyethylene (LLDPE). This mixture was extruded and films were made. These films had a tensile strength of 12.6 MPa (about 50 % of the value of LLDPE as such) and a yield value of 12.3 as compared to only 10.1 for polyethylene as such. Furthermore the film showed a elongation at break of 330 %. This combination of properties makes the film outstanding suitable as packaging film, which has the additional advantage of being biodegradable.

### Example II

Two mixtures A en B of linear low pressure polyethylene (LLDPE), hydroxypropyl starch (HPS) having a degree of substitution of 0.5 and EAA (ethylene acrylic acid copolymer) as a compatibilizing agent and stearic acid were prepared. The compositions of the mixtures are indicated in the table below. The mixtures were heated to 180°C in an extruder and extruded to form granulates and the granulates were made into films by extrusion-blowing. Composition A could not be made into a film.
Furthermore, two mixtures C and D having the same compositions as A and B, respectively, except that these mixtures contained 5 parts by weight of glycol in stead of 5 parts by weight of stearic acid, were prepared and made into films according to the same procedure.

**TABLE**

| | parts by weight | | | |
|---|---|---|---|---|
| | A | B | C | D |
| LLDPE | 30 | 50 | 30 | 50 |
| HPS | 50 | 30 | 50 | 30 |
| EAA | 15 | 15 | 15 | 15 |
| Stearic acid | 5 | 5 | -- | -- |
| Glycol | -- | -- | 5 | 5 |
| Tensile strength, MPa | --¹⁾ | 18.9 | 12.3 | 14.6 |
| Elongation at break, % | --¹⁾ | 360 | 330 | 640 |

| | | | | |
|---|---|---|---|---|
| ¹⁾ Composition A could not be made into films | | | | |

As appears from the above table, composition A, which contained stearic acid, could not be made into films, while composition C, which is identical to composition A except for the fact that C contains glycol instead of stearic acid, could be made into films having desirable properties.
Composition D, containing glycol, has a better balance of properties than composition B which differs from composition D in that B contains stearic acid instead of glycol.

### Example III

The following 2 mixtures were prepared and made into films using the method of example II. The HPS, EAA and LLDPE were the same as in the previous examples.

| | parts by weight | |
|---|---|---|
| | 1^{a)} | 2 |
| HPS | 50 | 50 |
| Ethylene glycol | 5 | - |
| Glycerol | - | 5 |
| EAA | 15 | 15 |
| LLDPE | 30 | 30 |
| Tensile strength, MPa | 12.3 | 9.8 |
| Elongation at break, % | 330 | 280.0 |

| | | |
|---|---|---|
| ^{a)} composition 1 is identical to composition C in example II. | | |

## Claims (Claims for the following Contracting State(s): DE, GB, FR, IT, NL, SE, CH, LI, BE, AT, LU, DK)

1. A composition containing a polymer, consisting of units derived from an unsaturated hydrocarbon monomer, a starch derivative and a compatibilizing agent, **characterized** in that the starch derivative is a C1-4 alkyl or hydroxyalkyl ether of starch having a degree of substitution of at least 0,25, the compatibilizing agent is a copolymer of ethylene and vinyl acetate or of ethylene and acrylic acid or a terpolymer of ethylene, vinylacetate and (meth)acrylic acid, and the composition also contains a polyhydric aliphatic alcohol having 2-10 carbon atoms and 2-6 hydroxyl groups as a dispersant/plasticizer for the starch based material.

2. A composition according to claim 1, **characterized** in that the polymer consisting of units derived from an unsaturated hydrocarbon monomer is an ethylene polymer.

3. A composition according to claim 1 or 2, **characterized** in that the starch ether is a condensation product of starch and propylene oxide.

4. A composition according to claims 1-3, **characterized** in that the starch ether has a degree of substitution of 0,4-1,0.

5. A composition according to claims 1-4, **characterized** in that the polyhydric aliphatic alcohol is chosen from ethylene glycol, propylene glycol or glycerol.

6. A composition according to claims 1-5, **characterized** in that it contains at least 20% by weight of a polymer consisting of units derived from an unsaturated hydrocarbon monomer, 20-80% by weight of starch ether, 11-19% by weight of copolymer and 2-8% by weight of polyhydric aliphatic alcohol, the sum total of these percentages being 100.

7. A process for preparing a composition according to one or more of the preceding claims, **characterized** in that the starch ether and the polyhydric aliphatic alcohol are extruded together whereupon the so obtained homogeneous material is admixed with the other compounds and this mixture is extruded, the mixture being heated during the processing.

8. Articles, manufactured by means of a composition according to claims 1-6 and with the use of the process according to claim 7, respectively.

## Claims (Claims for the following Contracting State(s): ES)

1. A process for preparing a composition, containing a polymer consisting of units derived from an unsaturated hydrocarbon monomer, a starch derivative and a compatibilizing agent, **characterized** in that the starch derivative is a C1-4 alkyl or hydroxyalkyl ether of starch having a degree of substitution of at least 0,25, the compatibilizing agent is a copolymer of ethylene and vinyl acetate or of ethylene and acrylic acid or a terpolymer of ethylene, vinylacetate and (meth)acrylic acid, and also a polyhydric aliphatic alcohol having 2-10 carbon atoms and 2-6 hydroxyl groups as a dispersant/plasticizer for the starch based material is incorporated into said composition.

2. A process according to claim 1, **characterized** in that the polymer consisting of units derived from an unsaturated hydrocarbon monomer is an ethylene polymer.

3. A process according to claim 1 or 2, **characterized** in that the starch ether is a condensation product of starch and propylene oxide.

4. A process according to claims 1-3, **characterized** in that the starch ether has a degree of substitution of 0,4-1,0.

5. A process according to claims 1-4, **characterized** in that the polyhydric aliphatic alcohol is chosen from ethylene glycol, propylene glycol or glycerol.

6. A process according to claims 1-5, **characterized** in that a composition, which contains at least 20% by weight of a polymer consisting of units derived from an unsaturated hydrocarbon monomer, 20-80% by weight of starch ether, 11-19% by weight of copolymer and 2-8% by weight of polyhydric aliphatic alcohol, the sum total of these percentages being 100, is prepared.

7. A process according to claims 1-6, **characterized** in that the starch ether and the polyhydric aliphatic alcohol are extruded together whereupon the so obtained homogeneous material is admixed with the other compounds and this mixture is extruded, the mixture being heated during the processing.

8. Articles, manufactured with the use of the process according to claims 1-7.

## Patentansprüche (Patentansprüche für folgende(n) Vertragsstaat(en): DE, GB, FR, IT, NL, SE, CH, LI, BE, AT, LU, DK)

1. Zusammensetzung, enthaltend ein Polymer, bestehend aus Einheiten, die von einem ungesättigten Kohlenwasserstoffmonomer abstammen, einem Stärkederivat und einem verträglichmachenden Mittel, dadurch gekennzeichnet,
daß das Stärkederivat ein C1-4 Alkyl- oder Hydroxyalkylether von Stärke ist, mit einem Substitutionsgrad von mindestens 0,25, daß das verträglichmachende Mittel ein Copolymer von Ethylen und Vinylacetat oder von Ethylen und Acrylsäure oder ein Terpolymer von Ethylen, Vinylacetat und (Meth)Acrylsäure ist, und daß die Zusammensetzung auch einen mehrwertigen aliphatischen Alkohol mit
2-10 Kohlenstoffatomen und 2-6 Hydroxylgruppen als Dispergen/Weichmacher für das Material auf Stärkebasis enthält.

2. Zusammensetzung nach Anspruch 1, dadurch gekennzeichnet,
daß das Polymer, welches aus Einheiten besteht, die von einem ungesättigten Kohlenwasserstoffmonomer abstammen, ein Ethylenpolymer ist.

3. Zusammensetzung nach Anspruch 1 oder 2, dadurch gekennzeichnet,
daß der Stärkeether ein Kondensationsprodukt von Stärke und Propylenoxid ist.

4. Zusammensetzung nach einem der Ansprüche 1 bis 3, dadurch gekennzeichnet,
daß der Stärkeether einen Substitutionsgrad von 0,4 bis 1,0 aufweist.

5. Zusammensetzung nach einem der Ansprüche 1 bis 4, dadurch gekennzeichnet,
daß der mehrwertige aliphatische Alkohol aus Ethylenglycol, Propylenglycol oder Glycerin ausgewählt ist.

6. Zusammensetzung nach einem der Ansprüche 1 bis 5, dadurch gekennzeichnet,
daß sie wenigstens 20 Gewichtsprozent eines Polymers, das aus Einheiten besteht, die von einem ungesättigten Kohlenwasserstoffmonomer abstammen, 20-80 Gewichtsprozent Stärkeether, 11-19 Gewichtsprozent Copolymer und 2-8 Gewichtsprozent mehrwertigen aliphatischen Alkohol enthält, wobei die Gesamtsumme dieser Prozentwerte 100 beträgt.

7. Verfahren zur Herstellung einer Zusammensetzung nach einem oder mehreren der vorstehenden Ansprüche, dadurch gekennzeichnet,
daß der Stärkeether und der mehrwertige aliphatische Alkohol zusammen extrudiert werden, worauf das so erhaltene homogene Material mit den anderen Verbindungen vermischt wird und diese Mischung extrudiert wird, wobei die Mischung während der Verarbeitung erhitzt wird.

8. Gegenstände, die mit Hilfe einer Zusammensetzung gemäß den Ansprüchen 1 bis 6 bzw. mit Hilfe des Verfahrens gemäß Anspruch 7 hergestellt sind.

## Patentansprüche (Patentansprüche für folgende(n) Vertragsstaat(en): ES)

1. Verfahren zur Herstellung einer Zusammensetzung, enthaltend ein Polymer, bestehend aus Einheiten, die von einem ungesättigten Kohlenwasserstoffmonomer abstammen, einem Stärkederivat und einem verträglichmachenden Mittel, dadurch gekennzeichnet,
daß das Stärkederivat ein C1-4 Alkyl- oder Hydroxyalkylether von Stärke ist, mit einem Substitutionsgrad von mindestens 0,25, daß das verträglichmachende Mittel ein Copolymer von Ethylen und Vinylacetat oder von Ethylen und Acrylsäure oder ein Terpolymer von Ethylen, Vinylacetat und (Meth)Acrylsäure ist, und daß dieser Zusammensetzung auch eine mehrwertiger aliphatischer Alkohol mit
2-10 Kohlenstoffatomen und 2-6 Hydroxylgruppen als Dispergens/Weichmacher für das Material auf Stärkebasis beigemengt ist.

2. Verfahren nach Anspruch 1, dadurch gekennzeichnet,
daß das Polymer, welches aus Einheiten besteht, die von einem ungesättigten Kohlenwasserstoffmonomer abstammen, ein Ethylenpolymer ist.

3. Verfahren nach Anspruch 1 oder 2, dadurch gekennzeichnet,
daß der Stärkeether ein Kondensationsprodukt von Stärke und Propylenoxid ist.

4. Verfahren nach einem der Ansprüche 1 bis 3, dadurch gekennzeichnet,
daß der Stärkeether einen Substitutionsgrad von 0,4 bis 1,0 aufweist.

5. Verfahren nach einem der Ansprüche 1 bis 4, dadurch gekennzeichnet,
daß der mehrwertige aliphatische Alkohol aus Ethylenglycol, Propylenglycol oder Glycerin ausgewählt ist.

6. Verfahren nach einem der Ansprüche 1 bis 5, dadurch gekennzeichnet,
daß eine Zusammensetzung zubereitet wird, die wenigstens 20 Gewichtsprozent eines Polymers, das aus Einheiten besteht, die von einem ungesättigten Kohlenwasserstoffmonomer abstammen, 20-80 Gewichtsprozent Stärkeether, 11-19 Gewichtsprozent Copolymer und 2-8 Gewichtsprozent mehrwertigen aliphatischen Alkohol enthält, wobei die Gesamtsumme dieser Prozentwerte 100 beträgt.

7. Verfahren nach einem der Ansprüche 1 bis 6, dadurch gekennzeichnet,
daß der Stärkeether und der mehrwertige aliphatische Alkohol zusammen extrudiert werden, worauf das so erhaltene homogene Material mit den anderen Verbindungen vermischt wird und diese Mischung extrudiert wird, wobei die Mischung während der Verarbeitung erhitzt wird.

8. Gegenstände, die mit Hilfe eines Verfahrens gemäß den Ansprüchen 1 bis 7 hergestellt sind.

## Revendications (Revendications pour l'(les) Etat(s) contractant(s) suivant(s): DE, GB, FR, IT, NL, SE, CH, LI, BE, AT, LU, DK)

1. Composition contenant un polymère, constitué d'unités dérivées à partir d'un monomère hydrocarboné insaturé, un dérivé de l'amidon et un agent de compatibilisation, caractérisé en ce que le dérivé de l'amidon est un éther d'alkyle ou d'hydroxyalkyle en C₁₋₄ de l'amidon ayant un degré de substitution d'au moins 0,25, l'agent de compatibilisation est un copolymère d'éthylène et d'acétate de vinyle, ou d'éthylène et d'acide acrylique, ou un terpolymère d'éthylène, d'acétate de vinyle et d'acide (méth)acrylique, et la composition contient également un polyalcool aliphatique ayant 2 à 10 atomes de carbone et 2 à 6 groupes hydroxy en tant que dispersant/plastifiant du dérivé d'amidon.

2. Composition selon la revendication 1, caractérisée en ce que le polymère constitué d'unités dérivées à partir d'un monomère hydrocarboné insaturé est un polymère d'éthylène.

3. Composition selon la revendication 1 ou 2, caractérisée en ce que l'éther d'amidon est un produit de condensation de l'amidon et d'oxyde de propylène.

4. Composition selon les revendications 1 à 3, caractérisée en ce que l'éther d'amidon a un degré de substitution de 0,4 à 1,0.

5. Composition selon les revendications 1 à 4, caractérisée en ce que le polyalcool aliphatique est choisi parmi l'éthylèneglycol, le propylèneglycol ou le glycérol.

6. Composition selon les revendications 1 à 5, caractérisée en ce qu'elle contient au moins 20 % en poids d'un polymère constitué d'unités dérivées à partir d'un monomère hydrocarboné insaturé, 20 à 80 % en poids d'éther d'amidon, 11 à 19 % en poids de copolymère et 2 à 8 % en poids de polyalcool aliphatique, la somme totale de ces pourcentages étant 100.

7. Procédé pour préparer une composition selon une ou plusieurs des revendications précédentes, caractérisé en ce que l'éther d'amidon et le polyalcool aliphatique sont extrudés ensemble, puis la matière homogène ainsi obtenue est mélangée avec les autres composés et ce mélange est extrudé, le mélange étant chauffé pendant la mise en oeuvre.

8. Articles fabriqués par utilisation respectivement d'une composition selon les revendications 1 à 6 et du procédé selon la revendication 7.

## Revendications (Revendications pour l'(les) Etat(s) contractant(s) suivant(s): ES)

1. Procédé pour préparer une composition contenant un polymère, constitué d'unités dérivées à partir d'un monomère hydrocarboné insaturé, un dérivé de l'amidon et un agent de compatibilisation, caractérisé en ce que le dérivé de l'amidon est un éther d'alkyle ou d'hydroxyalkyle en C₁₋₄ de l'amidon ayant un degré de substitutuion d'au moins 0,25, l'agent de compatibilisation est un copolymère d'éthylène et d'acétate de vinyle, ou d'éthylène et d'acide acrylique, ou un terpolymère d'éthylène, d'acétate de vinyle et d'acide (méth)acrylique, et également en ce qu'un polyalcool aliphatique ayant 2 à 10 atomes de carbone et 2 à 6 groupes hydroxy en tant que dispersant/plastifiant du dérivé d'amidon est incorporé à ladite composition.

2. Procédé selon la revendication 1, caractérisé en ce que le polymère constitué d'unités dérivées à partir d'un monomère hydrocarboné insaturé est un polymère d'éthylène.

3. Procédé selon la revendication 1 ou 2, caractérisé en ce que l'éther d'amidon est un produit de condensation de l'amidon et d'oxyde de propylène.

4. Procédé selon les revendications 1 à 3, caractérisé en ce que l'éther d'amidon a un degré de substitution de 0,4 à 1,0.

5. Procédé selon les revendications 1 à 4, caractérisé en ce que le polyalcool aliphatique est choisi parmi l'éthylèneglycol, le propylèneglycol ou le glycérol.

6. Procédé selon les revendications 1 à 5, caractérisé en ce que l'on prépare une composition qui contient au moins 20 % en poids d'un polymère constitué d'unités dérivées à partir d'un monomère hydrocarboné insaturé, 20 à 80 % en poids d'éther d'amidon, 11 à 19 % en poids de copolymère et 2 à 8 % en poids de polyalcool aliphatique, la somme totale de ces pourcentages étant 100.

7. Procédé selon les revendications 1 à 6, caractérisé en ce que l'éther d'amidon et le polyalcool aliphatique sont extrudés ensemble, puis la matière homogène ainsi obtenue est mélangée avec les autres composés et ce mélange est extrudé, le mélange étant chauffé pendant la mise en oeuvre.

8. Articles fabriqués par utilisation du procédé selon les revendications 1 à 7.
